# EUROPÄISCHE PATENTSCHRIFT

(11) **EP 2 114 963 B1**
(45) Veröffentlichungstag und Bekanntmachung des Hinweises auf die Patenterteilung: **27.08.2014**
(21) Anmeldenummer: 07857902.6
(22) Anmeldetag: 20.12.2007
(51) Int. Cl.: C07F 7/18, C07F 7/08

(54) **VERFAHREN ZUR HERSTELLUNG VON GLYCIDYLOXYALKYLTRIALKOXYSILANEN**
PROCESS FOR PREPARING GLYCIDYLOXYALKYLTRIALKOXYSILANES
PROCÉDÉ DE PRÉPARATION DE GLYCIDYLOXYALKYLTRIALCOXYSILANES

(30) Priorität: 09.02.2007 DE 102007007185
(43) Veröffentlichungstag der Anmeldung: 11.11.2009
(73) Patentinhaber: Evonik Degussa GmbH, 45128 Essen (DE)
(72) Erfinder: BADE, Stefan, F-68220 Michelbach Le Haut (FR); SELIGER, Beate, 22589 Hamburg (DE); SCHLADERBECK, Norbert, 65779 Kelkheim (DE); SAUER, Jörg, 48249 Dülmen (DE)
(86) Internationale Anmeldenummer: PCT/EP2007/064281
(87) Internationale Veröffentlichungsnummer: WO 2008/095570

(56) Entgegenhaltungen:
- EP-A- 0 288 286
- WO-A-01/51495
- DATABASE CA [Online] CHEMICAL ABSTRACTS SERVICE, COLUMBUS, OHIO, US; TACHIKAWA, MAMORU ET AL: "Preparation of hydrocarbonoxysilyl group-containing compounds by hydrosilylation" XP002472393 gefunden im STN Database accession no. 132:347727 & JP 2000 143679 A (DOW CORNING ASIA LTD., JAPAN) 26. Mai 2000 (2000-05-26)
- CHERNYSHEV, E. A. ET AL: "Hydrosilylation of allyl glycidyl ether with triethoxysilane" RUSSIAN JOURNAL OF GENERAL CHEMISTRY , 77(1), 55-61 CODEN: RJGCEK; ISSN: 1070-3632, 2007, XP002472392
- DATABASE CA [Online] CHEMICAL ABSTRACTS SERVICE, COLUMBUS, OHIO, US; SULTANOV, R. A. ET AL: "Hydrosilylation of vinyl glycidyl ether" XP002472394 gefunden im STN Database accession no. 70:115216 & ZHURNAL OBSHCHEI KHIMII , 39(2), 396-7 CODEN: ZOKHA4; ISSN: 0044-460X, 1969,

## Beschreibung

Die Erfindung betrifft ein Verfahren zur Herstellung von Glycidyloxyalkylalkoxysilanen durch Hydrosilylierung eines Olefinglycidethers in Gegenwart eines Katalysators.

Epoxyfunktionelle Silane sind wichtige technische Zwischen- oder Endprodukte in der Organosilanchemie. Sie finden ihren Einsatz als Haftvermittler bei Verbundmaterialien, z. B. in der Lack- und Glasfaserindustrie, in der Gießereitechnik und der Klebstoffindustrie; eine wichtige Rolle spielen besagte Verbindungen auch bei der Beschichtung von optischen Gläsern.

Die Herstellung von Glycidyloxyalkylalkoxysilanen erfolgt beispielsweise durch Umsetzung eines ein Wasserstoffatom tragenden Trialkoxysilans mit Allylglycidylether in Gegenwart eines Hydrosilylierungskatalysators und kann durch folgende allgemeine Reaktionsgleichung beschrieben werden:

CH₂(O)CHCH₂OCH₂CH=CH₂ + HSi(OR)₃ → CH₂(O)CHCH₂OC₃H₆Si(OR)₃

mit R = Alkyl, z. B. Methyl, Ethyl, Propyl. So werden mit R = Methyl die Herstellung von 3-Glycidyloxypropyltrimethoxysilan und mit R = Ethyl die Herstellung von 3-Glycidyloxypropyltriethoxysilan beschrieben. Als Nebenprodukte entstehen dabei Isomere, CH₂(O)CHCH₂OCH₂CH(Si(OR)₃)CH₃ sowie ein entsprechender 8-gliedriger Heterocyclus, weiterhin Glycidyloxytrialkoxysilan, Propyltrialkoxysilan, Propenylglycidylether und Tetraalkoxysilan, neben Hochsiederkomponenten. Insbesondere die destillativ schwer abtrennbaren Verbindungen, isomeres Glycidylalkoxypropyltrialkoxysilan und der 8-gliedrige Heterocyclus erfordern hohe Trennleistungen in einer Destillationskolonne und lange Destillationszeiten. Die Bildung der Propenylglycidylether und die Bildung von Tetraalkoxysilan stellen hohe Selektivitätsverluste dar.

Hydrosilylierungsreaktionen von H-Silanen mit Verbindungen, die eine C=C-Doppelbindung enthalten, werden entweder diskontinuierlich oder kontinuierlich durchgeführt, wobei die Hydrosilylierungsreaktion in der Regel durch Edelmetalle katalysiert wird. Die Herstellung von 3-Glycidyloxypropyltrialkoxysilanen erfolgt üblicherweise homogenkatalytisch mit einem Speier-Katalysator, H₂PtCl₆, oder einem Karstedt-Katalysator, Divinyltetramethyldisiloxan-Pt (EP 0 277 023, EP 0 288 286, JP 128763 und DE 2 159 991), sie kann aber auch heterogenkatalytisch mit Edelmetallen erfolgen (EP 0 548 974, US-Patent 4 736 049).

Führt man die Hydrosilylierung von Allylglycidylether mit Trimethoxysilan in Gegenwart eines homogenen Pt-Katalysators durch, ist zu beobachten, dass ein nicht zu vernachlässigender Anteil des eingesetzten Allylglycidylethers isomerisiert wird und damit für die Hydrosilylierung nicht mehr zur Verfügung steht. Dies verursacht in der Regel beträchtliche Selektivitätsverluste.

Ein weiterer Nachteil der bisherigen homogenen Katalysatoren ist die Bildung von kolloidalem Pt, welches ebenfalls zu einer erhöhten Nebenproduktbildung führt. Insbesondere bei Homogenkatalysatoren vom Karstedt-Typ wird die Bildung von kolloidalem Pt beobachtet. Neben einer Verminderung der Zielproduktselektivität kommt es zur Isomerisierung des eingesetzten Olefins, welches nach Isomerisierung für die Hydrosilylierung nicht mehr zur Verfügung steht.

EP 0 985 675 offenbart den Einsatz einer Säure als Promotor bei der Hydrosilylierung eines Olefins zur Herstellung von Alkylsilanen.

SU 415268 lehrt, Aminoalkylsilane durch Hydrosilylierung von Allylamin herzustellen, wobei auch diese Umsetzung in Gegenwart eines Katalysators und unter Zusatz einer Säure als Promotor durchgeführt wird.

E. A. Chernyshev et al. beschreiben in "Russian Journal of Genaral Chemistry", 2007, Vol. 77(1), S. 51-61, u. a. ein Verfahren zur Hydrosilylierung von Allylglycidylether mit Triethoxysilan in Gegenwart eines Platinkomplex- bzw. Speyer-Katalysators und diversen Promotoren bzw. Lösemitteln; gemäß der dortigen Tabelle 4 liegen die dabei erzielten Ausbeuten bei 0 bis max. 75%.

Es ist allgemein bekannt, dass sich ein Oxiran-Ring in der Regel unter Einfluss einer Säure öffnet und so eine sehr reaktive Spezies darstellt. Die Öffnung des Oxiran-Rings erfolgt hierbei sowohl durch Säurekatalyse als auch durch beliebige andere Nucleophile. (S. Hauptmann, "Organische Chemie", 1. Aufl. 1985, VEB Verlag für Grundstoffindustrie, Leipzig, Seiten 558ff).

Der vorliegenden Erfindung lag die Aufgabe zugrunde, ein weiteres, verbessertes Verfahren zur Herstellung von Glycidyloxyalkylalkoxysilanen bereitzustellen. Insbesondere bestand das Anliegen, die oben aufgeführten Nachteile und die damit verbunden wirtschaftlichen Verluste zu mindern.

Die Aufgabe wird erfindungsgemäß entsprechend den Merkmalen in den Patentansprüchen gelöst.

So wurde in überraschender Weise gefunden, dass homogene Pt-Katalysatoren, insbesondere Hexachlorplatinsäure sowie ein Karstedt-Katalysator, in Gegenwart eines sauren Promotors, insbesondere einer Mono- oder Dicarbonsäure, weder eine Epoxidringöffnung des Allylglycidylethers noch des Produkts Glycidyloxyalkylalkoxysilan verursachen. So kann der Homogenkatalysator insbesondere in Kombination mit dem Promotor und einem geeigneten Lösemittel bzw. Verdünnungsmittel oder einem entsprechenden Gemisch vorteilhaft eingesetzt werden, wobei als Löse- bzw. Verdünnungsmittel besonders vorteilhaft das jeweils entsprechende Zielprodukt verwendet wird. Darüber hinaus können durch das vorliegende Promotor-Verfahren die Selektivität in vorteilhafter Weise gesteigert werden. So können durch die erfindungsgemäße Lehre vorteilhaft die Bildung von kolloidalem Pt und die Nebenproduktbildung gemindert werden. Insbesondere der Anteil an isomerisiertem Produkt, an isomerisiertem Olefin und an Tetraalkoxysilan kann deutlich reduziert werden. Diese Wirkung tritt beim erfindungsgemäßen Verfahren insbesondere bei Einsatz von Speier-Katalysatoren oder Karstedt-Katalysatoren in besagter Kombination mit einem Promotor ein. Besonders bevorzugt wird die Produktselektivität gesteigert und die Bildung von Isomeren sowie Nebenprodukten zurückgedrängt, wenn man einen Überschuss der olefinischen Komponente gegenüber dem Hydrogentrialkoxysilan verwendet. Somit konnten bei der vorliegenden Erfindung Selektivitäten des Zielproduktes von > 87 % bei gleichzeitig nahezu vollständigem Umsatz (> 98 %) der Trialkoxysilan-Komponente erhalten werden.

Ebenfalls wurde gefunden, dass trotz adiabatischer Reaktionsführung im Reaktor und den damit verbundenen hohen Temperaturen der Promotor seine Selektivität steigernde Wirkung im Reaktionsablauf zeigt und hierbei trotz der hohen Temperaturen in besonders vorteilhafter Weise der Oxiran-Ring erhalten bleibt, obwohl der Promotor über Säureaktivität verfügt.

Überraschenderweise wurde ferner gefunden, dass der Wasser-Gehalt im Promotor die Selektivität im Wesentlichen nicht nachteilig beeinträchtigt. Die adiabatische Betriebsweise des Reaktors führt zu besonders vorteilhaften kurzen Verweilzeiten und zu einem verminderten Anteil an Nebenprodukten.

Gegenstand der vorliegenden Erfindung ist somit ein
Verfahren zur Herstellung von Glycidyloxyalkylalkoxysilanen der allgemeinen Formel (I)

(R")O-CₙH₂ₙSi(OR)₃ (I),

worin Gruppen R unabhängig für eine lineare oder verzweigte Alkylgruppe mit 1 bis 4 Kohlenstoffatomen stehen, n gleich 1, 2, 3, 4, 5, 6, 7 oder 8 sind und R" eine Gruppe H₂C(O)CH- oder H₂C(O)CHCH₂- darstellt,
indem man
(i) ein funktionalisiertes Alken der allgemeinen Formel (II)

   (R")O-CₙH₂ₙ₋₁ (II),

   worin R" eine Gruppe H₂C(O)CH- oder H₂C(O)CHCH₂- darstellt und n gleich 1, 2, 3, 4, 5, 6, 7 oder 8 ist,
   mit
(ii) mindestens einem Hydrogenalkoxysilan der allgemeinen Formel (III)

   HSi(OR)₃ (III),

   worin Gruppen R unabhängig für eine lineare oder verzweigte Alkylgruppe mit 1 bis 4 Kohlenstoffatomen stehen,
   in Gegenwart
(iii) mindestens eines homogenen Katalysators aus der Reihe der Speier- oder Karstedt-Katalysatoren,
(iv) mindestens eines Lösemittels und/oder mindestens eines Verdünnungsmittels und
(v) mindestens eines sauren Promotors aus der Reihe der Mono- und Dicarbonsäuren
   umsetzt,
   wobei man
   - die Komponenten (i) Olefin und (ii) Hydrogenalkoxysilan in einem molaren Verhältnis von 1,8 bis 1,0 zu 1,0,
   - den Katalysator (iii) zur Olefinkomponente (i) in einem molaren Verhältnis von 1 : 1 000 000 bis 1 : 25 000,
   - den Katalysator (iii) und den Promotor (v) in einem molaren Verhältnis 1 : 250 bis 1 : 25 000 und
   - man den Katalysator (iii) und den Promotor (v) gemeinsam in einem Lösemittel und/oder einem Verdünnungsmittel verdünnt einsetzt.

Beim erfindungsgemäßen Verfahren setzt man als Olefinkomponente (i) bevorzugt Allylglycidylether ein.

Als Hydrogenalkoxysilan (ii) verwendet man beim erfindungsgemäßen Verfahren bevorzugt Trimethoxysilan oder Triethoxysilan.

Dabei setzt man die Komponenten (i) Olefin und (ii) Hydrogenalkoxysilan vorteilhaft in einem molaren Verhältnis von 1,8 bis 1,0 zu 1,0, vorzugsweise 1,3 bis 1,1 zu 1,0, ein.

Darüber hinaus führt man beim erfindungsgemäßen Verfahren die Hydrosilylierung in Gegenwart von (iii) mindestens einem homogenen Katalysator aus der Reihe der Speier- oder Karstedt-Katalysatoren durch.

Unter einem Speier-Katalysator, wie er beim erfindungsgemäßen Verfahren verwendet werden kann, versteht ein Fachmann in der Regel Hexachloroplatinsäure bzw. Hexachlorplatinsäure gelöst in Isopropanol. Für dieses Katalysatorsystem sind dem Fachmann aber auch andere Lösemittel, wie Aceton oder Methanol, oder Lösemittelgemische bekannt.

Karstedt-Katalysatoren sind lösliche Pt(0)-Komplexkatalysatoren, wie sie beispielsweise in US 3,775,452, DE-OS 19 41 411 oder in Marciniec, B., "Compregensive Handbook of Hydrosilylation", Pergamon Press, New York (1992), beschrieben sind. Insbesondere setzt man beim erfindungsgemäßen Verfahren Pt(0)-Divinyltetramethyldisiloxan ein, wobei der Komplex in der Regel im Komplexierungsmittel gelöst und in Form eines Konzentrats vorliegt. Den Komplexkatalysator bzw. das Konzentrat von Pt(0)-Divinyltetramethyldisiloxan in Divinyltetramethyldisiloxan als Katalysatorsystem kann man darüber hinaus vorteilhaft in Xylol und/oder dem Zielprodukt des vorliegenden Verfahrens, d. h. vorzugsweise in 3-Glycidyloxypropyltrimethoxysilan oder 3-Glycidyloxypropyltriethoxysilan, gelöst einsetzen. Darüber hinaus kann man einer so erhältlichen Katalysatorzusammensetzung vorteilhaft die Promotorkomponente (v) zusetzen.

So setzt man beim erfindungsgemäßen Verfahren (iii) den Katalysator vorzugsweise in mindestens einem Lösemittel, insbesondere in Divinyltetramethyldisiloxan, und/oder mindestens einem Verdünnungsmittel, vorzugsweise im Hydrosilylierungsprodukt verdünnt, d. h. der Zielverbindung, insbesondere 3-Glycidyloxypropyltrimethoxysilan oder 3-Glycidyloxypropyltriethoxysilan, ein. Dabei kann das eingesetzte Lösemittel bzw. Verdünnungsmittel gleichzeitig als Verdünnungsmittel für das im Verfahren vorliegende Reaktionsgemisch dienen.

Vorteilhaft setzt man den Katalysator (iii) (bezogen auf das Metall) zur Olefinkomponente (i) in einem molaren Verhältnis von 1 : 1 000 000 bis 1 : 25 000, vorzugsweise 1 : 500 000 bis 1 : 100 000, ein.

So führt man beim erfindungsgemäßen Verfahren die Umsetzung (Hydrosilylierung) vorteilhaft in Gegenwart (iv) mindestens eines Lösemittels und/oder mindestens eines Verdünnungsmittels aus der Reihe der Paraffine, Toluol, Xylol, der organischen Komplexierungsmittel der Katalysatoren, beispielsweise Divinyltetramethyldisiloxan, der Hydrosilylierungsprodukte (Zielprodukt) oder einem Gemisch aus mindestens zwei der zuvor genannten Stoffe durch. So setzt man Lösemittel und/oder Verdünnungsmittel zu Katalysator (gerechnet als Pt-Metall) vorzugsweise in einem Massenverhältnis von 100 000 bis 10 zu 1, besonders bevorzugt von 10 000 bis 50 zu 1, insbesondere von 5 000 bis 100 zu 1, ein. Dadurch können die Einsatzstoffe im Eduktgemisch und im weiteren Verlauf des Verfahrens weitgehend gleichmäßig und damit in vorteilhafter Weise gemischt dosiert werden.

Weiter führt man die Umsetzung vorteilhaft in Gegenwart (v) mindestens eines sauren Promotors aus der Reihe der Mono- und Dicarbonsäuren, vorzugsweise Monosäuren, wie Ameisensäure, Essigsäure und Propionsäure, und anderer H-acider Verbindungen, beispielsweise Phenol oder Phenolderivate, durch. Dabei kann der Wassergehalt in den Promotoren 0 bis 3 000 Gew.-ppm betragen.

Bevorzugt setzt man beim erfindungsgemäßen Verfahren den Katalysator (iii) und den Promotor (v) in einem molaren Verhältnis (Katalysator bzgl. Metall) 1 : 250 bis 1 : 25 000, vorzugsweise 1 : 1 000 bis 1 : 5 000, ein.

Insbesondere setzt man beim erfindungsgemäßen Verfahren (iii) den Katalysator und den Promotor (v) gemeinsam in (iv) mindestens einem Lösemittel und/oder mindestens einem Verdünnungsmittel, vorzugsweise im Hydrosilylierungsprodukt verdünnt, ein. Dabei bevorzugt man ein Massenverhältnis von Lösemittel und/oder Verdünnungsmittel zu Promotor von 1 000 bis 0,001 zu 1, besonders bevorzugt 100 bis 0,01 zu 1, insbesondere von 10 bis 0,1 zu 1.

Zur Durchführung des erfindungsgemäßen Verfahrens kann man die Komponenten (i), (ii), (iii), (iv) und (v) vorteilhaft in einen Tangentialmischer bei Umgebungstemperatur, vorzugsweise 0 bis 40 °C, dosieren, mischt dabei die Komponenten und führt das Gemisch direkt einem Reaktor zu. Für die Dosierung können dabei die Komponenten (iii), (iv) und (v) bereits als Mischung bzw. Lösung eingesetzt werden.

Besonders vorteilhaft ist der Reaktor als adiabatisch betriebener Rohrreaktor, Blasensäulenreaktor oder als gerührter oder ungerührter Rührkesselreaktor ausgeführt. Der Reaktor ist geeigneterweise beheiz- und kühlbar, so dass man zum Anfahren des Prozesses den Reaktor vorheizen kann und sobald die exotherm verlaufende Umsetzung eingesetzt hat, entweder die Beheizung stoppt oder auf eine gewünschte Betriebstemperatur einstellt. Insbesondere bevorzugt ist der Reaktor standgeregelt betrieben, wobei die Reaktionsmischung durch aufsteigende Gasblasen, wie in einer Blasensäule, durchmischt wird, so dass man das Reaktorsystem unter hoher Rückvermischung betreiben kann. Vorteil dieses Reaktorsystems ist, dass man keine zusätzliche Konditionierung des Reaktors für das Starten benötigt. Weiter kann beim vorliegenden Verfahren vorteilhaft auf einen Vorreaktor sowie Einbauten im Reaktor, wie z. B. Füllkörper, verzichtet werden.

So verwendet man zur Durchführung des erfindungsgemäßen Verfahrens bevorzugt einen Rohrreaktor, einen Blasensäulenreaktor oder einen gerührten oder nicht gerührten Rührkesselreaktor.

Als Reaktormaterial eignen sich in der Regel alle Edelstähle, bevorzugt verwendet man Inconel, Hastelloy C4, Nickel, Email auf Metall, d. h. insbesondere im Reaktionsbereich emaillierte Reaktoren, oder Glas, beispielsweise ein entsprechend temperaturbeständiges Glas oder Quarzglas. Insbesondere verwendet man für die erfindungsgemäße Umsetzung einen Rohrreaktor mit einem Durchmesser zwischen 5 und 20 cm, vorzugsweise 10 cm, und einer Länge von 100 bis 400 cm. Dabei kann man mehrere Reaktoren parallel oder hintereinander schalten.

Bevorzugt führt man beim erfindungsgemäßen Verfahren die Umsetzung im Reaktor bei einer Reaktionstemperatur zwischen 40 und 200 °C, besonders bevorzugt zwischen 60 und 160 °C, und einem Druck von 0,5 und 20 bar abs., insbesondere bei Umgebungsdruck, d. h. 1 bar, und einer Raumgeschwindigkeit von 3 bis 30 [1/h], insbesondere 5 bis 10 [1/h] (Angaben i. N.), durch. Die mittlere Verweilzeit des Reaktionsgemischs im Reaktor beträgt vorzugsweise 1 bis 20 Minuten, besonders bevorzugt 3 bis 9 Minuten, insbesondere 5 bis 8 Minuten.

Das so erhaltene Umsetzungsprodukt wird in der Regel aufgearbeitet. Dazu kann das den Reaktor verlassende Umsetzungsprodukt geeigneterweise in einem Zwischenlager aufgefangen und anschließend einer Destillation zugeführt werden. Bei der Destillation trennt man geeigneterweise die im Überschuss eingesetzte Olefinkomponente sowie gegebenenfalls eingesetztes Lösemittel ab und kann diese vorteilhaft recyclieren. Darüber hinaus erhält man in vorteilhafter Weise das Ziel- bzw. Endprodukt, insbesondere gewinnt man in vorteilhafter Weise 3-Gylcidyloxypropyltrimethoxysilan oder 3-Glycidyloxypropyltriethoxysilan.

Das erfindungsgemäße Verfahren, insbesondere die Schritte Mischen und Dosierung der Eduktkomponenten, Umsetzung (Hydrosilylierung) und Aufarbeitung, kann man batchweise oder kontinuierlich durchführen.

Im Allgemeinen führt man das erfindungsgemäße Verfahren wie folgt aus:
Das funktionalisierte Alken, das Hydrogenalkoxysilan, der homogene Katalysator in seinem Lösemittel, das Verdünnungsmittel und der Promotor werden in der Regel über einen Mischstufe dem Reaktor ideal gemischt und kontinuierlich zugeführt.
Geeigneterweise werden so die Einsatzstoffkomponenten (i) bis (v) in einen Tangantialmischer dosiert, gemischt und das Reaktionsgemisch dem auf Betriebstemperatur befindlichen Reaktorsystem zugeführt und umgesetzt. Dazu kann man den Katalysator bzw. das Katalysatorsystem mit einem Lösemittel, einem Verdünnungsmittel oder einem Gemisch aus Lösemittel und Verdünnungsmittel sowie dem Promotor mischen und als Gemisch dosieren. Man kann aber auch den Katalysator mit Lösemittel bzw. Verdünnungsmittel mischen und das so erhaltene Gemisch in die Mischstufe dosieren. Dabei kann der Promotor separat vom Katalystor- / Löse- bzw. Verdünnungsmittelgemisch in die Mischstufe dosiert werden.
Darüber hinaus kann man den Promotor gemeinsam mit Löse- bzw. Verdünnungsmittel als Gemisch dosieren. Nach dem Starten der Reaktion (Hydrosilylierung) im Reaktor kann in vorteilhafter Weise der äußere Energieeintrag gestoppt und die Reaktionswärme zur inneren Beheizung des Reaktionsgemisches genutzt werden. Der Reaktor wird bevorzugt kontinuierlich und mit hoher Rückvermischung und kurzer Verweilzeit betrieben. So erzielt man beim erfindungsgemäßen Verfahren in besonders hervorzuhebender Weise einen hohen Umsatz von 98 bis 100 % der Trialkoxysilan-Komponente.

Das bei der Umsetzung (Hydrosilylierung) erhaltene Produktgemisch kann nachfolgend mittels Destillation aufgearbeitet werden. Dabei kann die Destillation unter vermindertem Druck durchgeführt werden, beispielsweise in einem Kolonnensystem, einem Dünnschichtverdampfer bzw. Kurzwegverdampfer. Im Überschuss eingesetzte und in der Aufarbeitung abgetrennte Olefinkomponente sowie hier abgetrenntes Löse- bzw. Verdünnungsmittel sowie Promotor kann recycliert werden. Das Zielprodukt fällt in der Regel im Sumpf an und kann im Rahmen der Aufarbeitung einer zusätzlichen Reindestillation unterzogen werden.

So zeichnet sich das erfindungsgemäße Verfahren, insbesondere aufgrund seiner vergleichsweise hohen Selektivität, durch eine nochmals deutlich verbesserte Wirtschaftlichkeit aus. Die Steigerung der Selektivität gelingt erfindungsgemäß durch den Einsatz der speziell ausgewählten Katalysatorsysteme in Kombination mit mindestens einem Promotor sowie einem Löse- bzw. Verdünnungsmittel, wodurch vorteilhaft die Zurückdrängung der Nebenproduktbildung, insbesondere von isomerisiertem Olefin, isomerisiertem Zielprodukt und Tetraalkoxysilan, bewirkt werden kann. Besonders vorteilhaft ist die hohe Zielproduktselektivität bei nahezu vollständigem Umsatz der Trialkoxysilan-Komponente.

Die vorliegende Erfindung wird durch das nachfolgende Beispiel näher erläutert, ohne den Gegenstand der Erfindung zu beschränken.

### Beispiel

Im Beispiel wurde Allylglycidylether mit Trimethoxysilan zu 3-Glycidyloxypropyltrimethoxysilan umgesetzt. Die Reaktion erfolgte kontinuierlich durch Einspeisung der Rohstoffe (Allylglycidylether: 9,6 kg/h und Trimethoxysilan: 8 kg/h) zusammen mit dem Pt-Karstedt-Katalysator in Gegenwart von Essigsäure (0,05 Gew.-%, bezogen auf die gesamte Reaktionsmasse) in einen Rohrreaktor. Die auf metallisches Platin bezogene Konzentration des Katalysators betrug dabei 2 ppm. Dabei wurde der Pt-Karstedt-Katalysator in 3-Glycidyloxypropyltrimethoxysilan gelöst. Die Reaktionstemperatur lag bei ca. 160 °C. Die Reaktion wurde mit einem Überschuss an Allylglycidylether gefahren (molares Verhältnis: Allylglycidylether : Trimethoxysilan = 1,28 : 1). Die entstandene Reaktionsmischung setzte sich zusammen aus:

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,2 | 0,4 | 0,4 | 6,4 | 3 | 0,3 | 0,1 | 87,3 | 1,9 |

- TMOS: = Trimethoxysilan
- DYN M: = Tetramethoxysilan
- AGE: = Allylglycidylether
- cis-iso-AGE: = cis-Propenylglycidylether
- trans-iso-AGE: = trans-Propenylglycidylether
- iso-GLYMO: = 2-Glycidyloxy-1-methyl-ethyltrimethoxysilan
- cyclo-GLYMO: = 1-Di-methoxy-sila-2,5-dioxa-3-methoxy-methyl-cyclooctan
- GLYMO: = 3-Glycidyloxypropyltrimethoxysilan
- HS: = Hochsieder

Die Bestimmung der Zusammensetzung des Produktgemischs erfolgte mittels Gaschromatographie.

Führt man das zuvor beschriebene Verfahren ohne den Einsatz von Essigsäure als Promotor durch, erzielt man folgende Reaktionszusammensetzung.

| TMOS | DYN M | AGE | cis-iso-AGE | trans-iso-AGE | iso-GLYMO | cyclo-GLYMO | GLYMO | HS |
|---|---|---|---|---|---|---|---|---|
| [%] | [%] | [%] | [%] | [%] | [%] | [%] | [%] | [%] |
| 0,3 | 1,15 | 1,7 | 6,35 | 6,35 | 1,1 | 0,15 | 81 | 1,9 |

Die Vorteile des homogenen Pt-Katalysators in Gegenwart von organischer Säure in Kombination mit der Verwendung des Zielprodukts als Löse- bzw. Verdünnungsmittels sind die gesteigerte Selektivität bezüglich des Zielprodukts, insbesondere Verringerung des Anteils an Iso-Produkt und Cyclo-Produkt, und die Zurückdrängung der Isomerisierung der eingesetzten olefinischen Verbindung.

Die verringerte Nebenproduktbildung führt darüber hinaus zu einer leichteren Destillierbarkeit des Rohprodukts und zu einer Qualitätssteigerung, d. h. es ist eine geringere Trennleistung erforderlich und kürzere Destillationszeiten im Destillationsbatch, wenn Iso- und Cyclo-Produkt in geringeren Mengen vorhanden sind. Auch die Reinheit des Zielprodukts 3-Glycidyloxypropyltrimethoxysilan kann somit gesteigert werden.

## Patentansprüche

1. Verfahren zur Herstellung von Glycidyloxyalkylalkoxysilanen der allgemeinen Formel (I)
(R")O-CₙH₂ₙSi(OR)₃ (I),
worin Gruppen R unabhängig für eine lineare oder verzweigte Alkylgruppe mit 1 bis 4 Kohlenstoffatomen stehen, n gleich 1, 2, 3, 4, 5, 6, 7 oder 8 sind und R" eine Gruppe H₂C(O)CH- oder H₂C(O)CHCH₂- darstellt,
indem man
(i) ein funktionalisiertes Alken der allgemeinen Formel (II)
(R")O-CₙH₂ₙ₋₁ (II),
worin R" eine Gruppe H₂C(O)CH- oder H₂C(O)CHCH₂- darstellt und n gleich 1, 2, 3, 4, 5, 6, 7 oder 8 ist,
mit
(ii) mindestens einem Hydrogenalkoxysilan der allgemeinen Formel (III)
HSi(OR)₃ (III),
worin Gruppen R unabhängig für eine lineare oder verzweigte Alkylgruppe mit 1 bis 4 Kohlenstoffatomen stehen,
in Gegenwart
(iii) mindestens eines homogenen Katalysators aus der Reihe der Speier- oder Karstedt-Katalysatoren,
(iv) mindestens eines Lösemittels und/oder mindestens eines Verdünnungsmittels und
(v) mindestens eines sauren Promotors aus der Reihe der Mono- und Dicarbonsäuren
umsetzt,
wobei man
- die Komponenten (i) Olefin und (ii) Hydrogenalkoxysilan in einem molaren Verhältnis von 1,8 bis 1,0 zu 1,0,
- den Katalysator (iii) zur Olefinkomponente (i) in einem molaren Verhältnis von 1 : 1 000 000 bis 1 : 25 000,
- den Katalysator (iii) und den Promotor (v) in einem molaren Verhältnis 1 : 250 bis 1 : 25 000 und
- man den Katalysator (iii) und den Promotor (v) gemeinsam in einem Lösemittel und/oder einem Verdünnungsmittel verdünnt
einsetzt.

2. Verfahren nach Anspruch 1,
**dadurch gekennzeichnet,**
**dass** man als funktionelle Olefinkomponente (i) Allylglycidylether einsetzt.

3. Verfahren nach Anspruch 1 oder 2,
**dadurch gekennzeichnet,**
**dass** man als Hydrogenalkoxysilan (ii) Trimethoxysilan oder Triethoxysilan einsetzt.

4. Verfahren nach einem der Ansprüche 1 bis 3,
**dadurch gekennzeichnet,**
**dass** man (iii) den Katalysator in einem Lösemittel und/oder im Hydrosilylierungsprodukt verdünnt einsetzt.

5. Verfahren nach einem der Ansprüche 1 bis 4,
**dadurch gekennzeichnet,**
**dass** man die Umsetzung in Gegenwart (iv) mindestens eines Lösemittels und/oder mindestens eines Verdünnungsmittels aus der Reihe der Paraffine, Toluol, Xylol, der organischen Komplexierungsmittel der Katalysatoren, der Hydrosilylierungsprodukte oder einem Gemisch aus mindestens zwei der zuvor genannten Stoffe durchführt.

6. Verfahren nach einem der Ansprüche 1 bis 5,
**dadurch gekennzeichnet,**
**dass** man (iii) den Katalysator und den Promotor (v) gemeinsam im Hydrosilylierungsprodukt verdünnt einsetzt.

7. Verfahren nach einem der Ansprüche 1 bis 6,
**dadurch gekennzeichnet,**
**dass** man die Komponenten (i), (ii), (iii), (iv) und (v) in einen Tangentialmischer dosiert, mischt und einem Reaktor zuführt.

8. Verfahren nach einem der Ansprüche 1 bis 7,
**dadurch gekennzeichnet,**
**dass** man die Umsetzung im Reaktor bei einer Reaktionstemperatur zwischen 40 und 200 °C, einem Druck von 0,5 und 20 bar und einer Raumgeschwindigkeit von 3 bis 30 [1/h] durchführt.

9. Verfahren nach einem der Ansprüche 1 bis 8,
**dadurch gekennzeichnet,**
**dass** man das Umsetzungsprodukt aufarbeitet.

10. Verfahren nach einem der Ansprüche 1 bis 9,
**dadurch gekennzeichnet,**
**dass** man 3-Glycidyloxypropyltrimethoxysilan oder 3-Glycidyloxypropyltriethoxysilan gewinnt.

## Claims

1. Process for preparing glycidyloxyalkylalkoxysilanes of the general formula (I)
(R") O-CₙH₂ₙSi (OR)₃ (I),
where groups R are each, independently of one another, a linear or branched alkyl group having from 1 to 4 carbon atoms, n is 1, 2, 3, 4, 5, 6, 7 or 8 and R" is an H₂C(O)CH- or H₂C(O)CHCH₂- group,
which comprises reacting
(i) a functionalized alkene of the general formula (II)
(R'') O-CₙH₂ₙ₋₁ (II),
where R'' is an H₂C(O)CH- or H₂C(O)CHCH₂-group and n is 1, 2, 3, 4, 5, 6, 7 or 8,
with
(ii) at least one hydrogenalkoxysilane of the general formula (III)
HSi(OR)₃ (III),
where groups R are each, independently of one another, a linear or branched alkyl group having from 1 to 4 carbon atoms,
in the presence of
(iii) at least one homogeneous catalyst from the group consisting of Speier and Karstedt catalysts,
(iv) at least one solvent and/or at least one diluent and
(v) at least one acid promoter from the group consisting of monocarboxylic acid and dicarboxylic acids,
wherein
- the components (i) olefin and (ii) hydrogenalkoxysilane are used in a molar ratio of 1.8-1.0:1.0,
- the catalyst (iii) is used in a molar ratio to the olefin component (i) of from 1:1 000 000 to 1:25 000,
- the catalyst (iii) and the promoter (v) are used in a molar ratio of from 1:250 to 1:25 000 and
- the catalyst (iii) and the promoter (v) are used diluted together in a solvent and/or a diluent.

2. Process according to Claim 1,
**characterized in that**
allyl glycidyl ether is used as functional olefin component (i).

3. Process according to Claim 1 or 2,
**characterized in that**
trimethoxysilane or triethoxysilane is used as hydrogenalkoxysilane (ii).

4. Process according to any of Claims 1 to 3,
**characterized in that**
the catalyst (iii) is used in a solvent and/or diluted in the hydrosilylation product.

5. Process according to any of Claims 1 to 4,
**characterized in that**
the reaction is carried out in the presence of (iv) at least one solvent and/or at least one diluent from the group consisting of paraffins, toluene, xylene, the organic complexing agents of the catalysts, the hydrosilylation products or a mixture of at least two of the abovementioned materials.

6. Process according to any of Claims 1 to 5,
**characterized in that**
the catalyst (iii) and the promoter (v) are used together diluted in the hydrosilylation product.

7. Process according to any of Claims 1 to 6,
**characterized in that**
the components (i), (ii), (iii), (iv) and (v) are introduced into a tangential mixer, mixed and fed to a reactor.

8. Process according to any of Claims 1 to 7,
**characterized in that**
the reaction in the reactor is carried out at a reaction temperature in the range from 40 to 200°C, a pressure of from 0.5 to 20 bar and a space velocity of from 3 to 30 [1/h].

9. Process according to any of Claims 1 to 8,
**characterized in that**
the reaction product is worked up.

10. Process according to any of Claims 1 to 9,
**characterized in that**
3-glycidyloxypropyltrimethoxysilane or 3-glycidyloxypropyltriethoxysilane is obtained.

## Revendications

1. Procédé pour la préparation de glycidyloxyalkylalcoxysilanes de formule générale (I) (R") O-CₙH₂ₙSi (OR) 3 (I), dans laquelle les groupes R représentent, indépendamment, un groupe alkyle linéaire ou ramifié comprenant 1 à 4 atomes de carbone, n vaut 1, 2, 3, 4, 5, 6, 7 ou 8 et R" représente un groupe H₂C(O)CH- ou H₂C(O)CHCH₂-, en ce qu'on transforme
(i) un alcène fonctionnalisé de formule générale (II)
(R")O-CₙH₂ₙ₋₁ (II),
dans laquelle R" représente un groupe H₂C(O)CH- ou H₂C(O)CHCH₂- et n vaut 1, 2, 3, 4, 5, 6, 7 ou 8,
(ii) avec au moins un hydrogénoalcoxysilane de formule générale (III)
HSi(OR)₃ (III),
dans laquelle les groupes R représentent, indépendamment, un groupe alkyle linéaire ou ramifié comprenant 1 à 4 atomes de carbone,
en présence
(iii) d'au moins un catalyseur homogène de la série des catalyseurs de Speier ou de Karstedt,
(iv) d'au moins un solvant et/ou d'au moins un diluant et
(v) d'au moins un promoteur acide de la série des acides monocarboxyliques et dicarboxyliques
en utilisant
- les composants (i) oléfine et (ii) hydrogénoalcoxysilane dans un rapport molaire de 1,8 à 1,0:1,0,
- le catalyseur (iii) et le composant oléfinique (i) dans un rapport molaire de 1:1 000 000 à 1:25 000,
- le catalyseur (iii) et le promoteur (v) dans un rapport molaire de 1:250 à 1:25 000 et
- le catalyseur (iii) et le promoteur (v) ensemble dans un solvant et/ou un diluant.

2. Procédé selon la revendication 1, **caractérisé en ce qu'**on utilise, comme composant oléfinique fonctionnel (i), l'allylglycidyléther.

3. Procédé selon la revendication 1 ou 2, **caractérisé en ce qu'**on utilise, comme hydrogénoalcoxysilane (ii), le triméthoxysilane ou le triéthoxysilane.

4. Procédé selon l'une quelconque des revendications 1 à 3, **caractérisé en ce qu'**on utilise (iii) le catalyseur sous forme diluée dans un solvant et/ou dans le produit d'hydrosilylation.

5. Procédé selon l'une quelconque des revendications 1 à 4, **caractérisé en ce qu'**on réalise la transformation en présence (iv) d'au moins un solvant et/ou d'au moins un diluant de la série formée par les paraffines, le toluène, le xylène, les complexants organiques des catalyseurs, les produits d'hydrosilylation ou un mélange d'au moins deux des substances susmentionnées.

6. Procédé selon l'une quelconque des revendications 1 à 5, **caractérisé en ce qu'**on utilise (iii) le catalyseur et le promoteur (v) ensemble sous forme diluée dans le produit d'hydrosilylation.

7. Procédé selon l'une quelconque des revendications 1 à 6, **caractérisé en ce qu'**on dose les composants (i), (ii), (iii), (iv) et (v) dans un mélangeur tangentiel, on les mélange et on les introduit dans un réacteur.

8. Procédé selon l'une quelconque des revendications 1 à 7, **caractérisé en ce qu'**on réalise la transformation dans le réacteur à une température de réaction entre 40 et 200°C, à une pression de 0,5 et 20 bars et à une vitesse spatiale de 3 à 30 [1/h].

9. Procédé selon l'une quelconque des revendications 1 à 8, **caractérisé en ce qu'**on traite le produit de transformation.

10. Procédé selon l'une quelconque des revendications 1 à 9, **caractérisé en ce qu'**on obtient du 3-glycidyloxypropyltriméthoxysilane ou du 3-glycidyloxypropyltriéthoxysilane.
